# EUROPEAN PATENT SPECIFICATION

(11) **EP 1 145 818 B1**
(45) Date of publication and mention of the grant of the patent: **09.06.2004**
(21) Application number: 01108934.9
(22) Date of filing: 10.04.2001
(51) Int. Cl.: B29C 45/26, B29D 11/00

(54) **Method and device for producing thick lenses of plastic material**
Verfahren und Vorrichtung zur Herstellung von dicken Linsen aus Kunststoffmaterial
Procédé et dispositif de production de lentilles épaisses en matière plastique

(30) Priority: 13.04.2000 IT MI000822
(43) Date of publication of application: 17.10.2001
(73) Proprietor: Fallini, Andrea, 20025 Legnano (IT); Fallini, Roberto, 43010 Polesine Parmense (IT)
(72) Inventor: Fallini Andrea, 20025 Legnano (IT)
(74) Representative: Cerbaro, Elena, Dr.

(56) References cited:
- EP-A- 0 788 872
- US-A- 4 702 689
- PATENT ABSTRACTS OF JAPAN vol. 1998, no. 8, 30 June 1998 (1998-06-30) -& JP 10 058496 A (KONICA CORP), 3 March 1998 (1998-03-03)
- PATENT ABSTRACTS OF JAPAN vol. 11, no. 114 (M-579), 10 April 1987 (1987-04-10) -& JP 61 258718 A (MATSUSHITA ELECTRIC IND CO LTD), 17 November 1986 (1986-11-17)

## Description

The present invention relates to a method and device for producing thick lenses of plastic material.

As is known, numerous devices, including vehicle headlamps, comprise a light source and a lens for correctly orienting the beam emitted by the source; and many applications, such as motor vehicles, call for thick lenses with superior optical characteristics normally only be obtainable from glass lenses, which, however, are extremely heavy and relatively expensive and difficult to produce.

On the other hand, known methods of producing plastic lenses fail to provide for lenses which are both relatively thick and have high-quality optical surfaces. Thick plastic lenses, in fact, are injection molded by feeding a suitable plastic material into a mold comprising two half-molds defining a cavity of the same shape as the lens for molding. In known solutions, the injection channel is formed between the two half-molds, lies substantially in the plane of the lens for molding (perpendicular to the optical axis of the lens), and terminates at a lateral edge of the mold cavity, so that the material is injected at the peripheral edge of the lens (so-called direct injection). Particularly when dealing with thick lenses, this type of solution leads to the formation of air pockets and surface defects which impair the quality of the optical surfaces of the lens, and which are mainly due to the way the plastic material cools inside the mold. As it cools, in fact, the material shrinks considerably so that the molding may be smaller than or differ in shape from the mold cavity. To partly compensate for shrinkage of the material, additional liquid material is normally fed into the mold at the hold stage.

If, however, the material is injected, as currently, along the thin peripheral edge of the lens, the material in this region sets faster than in the thicker regions (particularly the center of the lens); and, once the edge of the lens has set, no more material can be fed into the mold to compensate for thermal shrinkage, and the material shrinks considerably, thus deforming the optical surfaces and/or forming air pockets (voids) inside the body of the lens. The problem is further compounded by the material already beginning to cool inside the injection channel, which, in known solutions, has no heating elements.

One known variation of plastic lens injection molding technology - in,this case, relative to double-concave lenses - is described in US Patent n. 4 560 342 : the injection channel is still formed between the two half-molds, is substantially perpendicular to the optical axis of the lens for molding, and is connected to the peripheral edge of the cavity defining the lens mold, but, in this case, is movable substantially into the center of the cavity to produce lenses with substantially no joint lines. The drawbacks mentioned relative to cooling of the material inside the mold, however, still remain, and the equipment, requiring a movable injection channel, is obviously extremely complex and expensive to produce and operate.

JP 10-58496 discloses an apparatus wherein the molding direction is parallel to the optical axis of the lens to be molded, but laterally spaced apart therefrom; US-A-4702689 discloses an apparatus wherein plugging means are axially movable inside the injection nozzle to close the injection gate, but which are not capable to restore the molded surface after gate closure.

It is therefore an object of the present invention to provide a method and device for producing thick plastic lenses, designed to eliminate the aforementioned drawbacks, and which, in particular, provide in a straightforward, low-cost manner for obtaining plastic lenses which are both relatively thick and have superior optical characteristics by being substantially free of defects.

According to the present invention, there is provided a method of producing thick lenses of plastic material as claimed in claim 1.

The invention also relates to a device for producing thick lenses of plastic material as claimed in claim 4.

The invention therefore provides in a straightforward, low-cost manner for obtaining thick lenses of plastic material with excellent optical characteristics: injecting the material at the center of the optical surface not only prevents the feed region from setting before the mold is filled, but also provides for optimum distribution of the material, thus ensuring uniform cooling with no defects.

A number of non-limiting embodiments of the present invention will be described by way of example with reference to the accompanying drawings, in which:
Figure 1 shows a highly schematic section of a device for producing thick lenses of plastic material in accordance with the invention, and illustrated in the performance of a first step in the method according to the invention;
Figure 2 shows the Figure 1 device in the course of a second step in the method according to the invention.

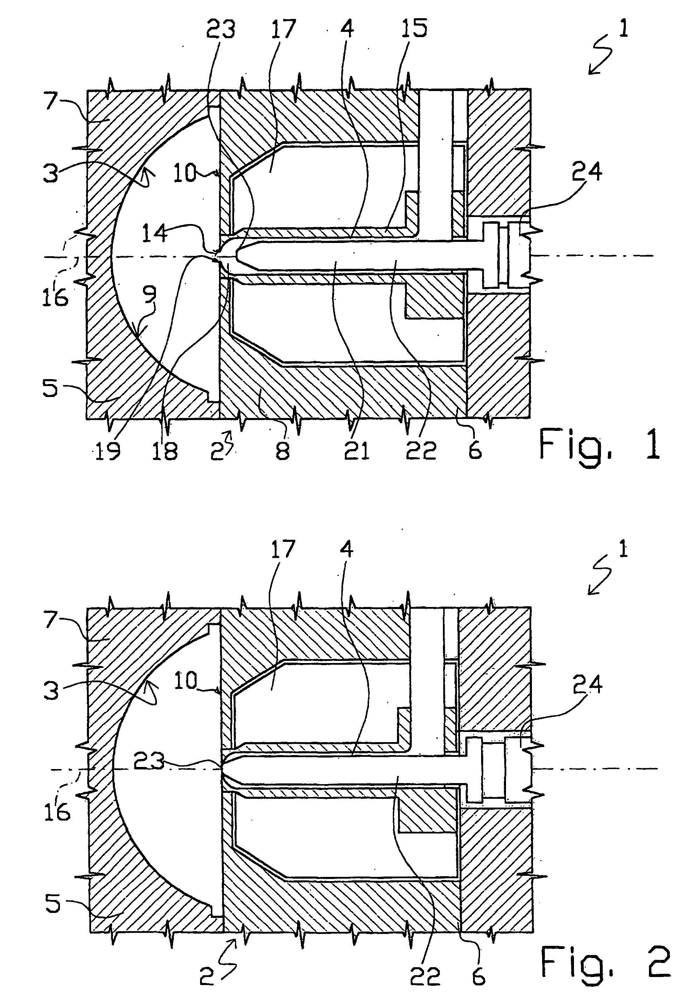

Number 1 in Figure 1 indicates as a whole a device for producing thick lenses of plastic material. As is known, "thick lenses" is the term generally applied to lenses with a diameter to thickness ratio of less than about 10, and which, in the automotive industry, is normally less than about 4.

Device 1 comprises a mold 2 having an inner cavity 3 corresponding in shape to the lens for molding; and an injection channel 4 for feeding liquid plastic material into cavity 3. Mold 2 comprises two portions or half-molds 5, 6 movable (in known manner) with respect to each other and connectable to define cavity 3 when mold 2 is closed. Cavity 3 has two opposite end walls 7, 8 carried respectively by half-molds 5, 6 and having respective inner work surfaces 9, 10, which are respectively concave and substantially flat, and correspond to respective optical surfaces of the lens for molding (which, in the non-limiting example shown, is therefore a planoconvex lens defined by a convex optical surface and a substantially plane optical surface). Half-molds 5, 6 mate along work surface 10.

At a geometric center of work surface 10 (which has for example a circular shape), end wall 8 has an injection hole 14 formed through end wall 8 itself. Injection channel 4 is formed in a body 15 housed inside half-mold 6; extends through end wall 8; communicates with cavity 3 through injection hole 14; is substantially perpendicular to work surface 10 and parallel to an optical axis 16 of the lens for molding (with its longitudinal axis substantially coincident with optical axis 16); is connected in known manner to a known injection press not shown; has known heating means 17 not shown or described in detail for the sake of simplicity; and comprises an end nozzle 18, which communicates with cavity 3 through injection hole 14, is housed inside end wall 8, has a section converging towards cavity 3, and terminates with an end edge 19 substantially flush with work surface 10, so that injection channel 4 is entirely outside cavity 3.

Injection channel 4 also has movable plugging means 21 for selectively closing injection hole 14, and which may be of any known type, e.g. comprising a pin plug 22 sliding axially inside injection channel 4 up to end nozzle 18 and having a head 23 insertable inside injection hole 14, flush with work surface 10, to restore the continuity of work surface 10. The sliding movement of pin plug 22 is controlled by known actuating means 24 (shown schematically in Figure 1).

With reference also to Figure 2, in which any details similar to or identical with those already described are indicated using the same reference numbers, device 1 for implementing the method of producing thick lenses of plastic material according to the invention operates as follows.

First of all, mold 2 is formed with a cavity 3 of the desired shape, corresponding to the lens for molding and having, in particular, a work surface 10 corresponding to an optical surface of the lens. Half-molds 5, 6 are mated to close mold 2, and a given quantity, sufficient to fill cavity 3, of a liquid plastic material at a predetermined temperature is injected into cavity 3. By virtue of the particular configuration of device 1, the liquid plastic material is injected into mold 2 at the geometric center of work surface 10 and in a direction substantially perpendicular to work surface 10 and therefore perpendicular to the plane (and to the optical surfaces) of the lens for molding. More specifically, the injection direction is substantially coincident with optical axis 16 of the lens for molding.

As shown in Figure 1, during injection, injection hole 14 is open, by pin plug 22 being withdrawn to allow the material to flow from injection channel 4 to injection hole 14 and into cavity 3. During injection, injection channel 4 is heated (by heating means 17) to a given temperature such as to prevent the plastic material from setting inside injection channel 4.

Once the liquid plastic material is injected into mold 2 (including any material injected to compensate for thermal shrinkage), pin plug 22 is moved by actuating means 24 into an extracted position (Figure 2) in which head 23 is inserted inside injection hole 14, flush with work surface 10, to restore the continuity of work surface 10. This is then followed by a cooling step in which the plastic material inside mold 2 is set.

Half-molds 5, 6 are then parted to open mold 2, and the lens is extracted from cavity 3.

Clearly, changes may be made to the method and device as described and illustrated herein without, however, departing from the scope of the present invention.

In particular, though reference is made to lenses having a convex optical surface and a substantially plane optical surface, the method and device according to the invention obviously also apply to other types of lenses.

## Claims

1. A method of producing thick lenses of plastic material, in particular lenses having a diameter to thickness ratio of less than about 10, and comprising the steps of:
- preparing a mold (2) having an inner cavity (3) corresponding in shape to the lens for molding and having a first work surface (10) corresponding to a first optical surface of said lens; and
- effecting an injection of liquid plastic material into said cavity (3) of the mold (2); said injection being performed by means of an injection channel (4) completely outside said cavity (3) and having an end nozzle (18) communicating with said cavity (3) and in turn having an end edge (19) flush with said first work surface (10);
the method being **characterized in that** said injection of liquid plastic material is effected at a geometric center of said first work surface (10) and in a direction substantially perpendicular to said first work surface (10), and is followed by a step of closing said injection channel (4) and restoring the continuity of said first work surface (10).

2. A method as claimed in Claim 1, **characterized in that** said injection is performed by means of an injection channel (4) heated to and maintained at a predetermined temperature such as to prevent said plastic material from setting in said injection channel (4).

3. A method as claimed in Claim 2, **characterized by** also comprising, after said step of closing said injection channel (4) and restoring the continuity of the work surface (10), a step of cooling the plastic material in the mold (2) to cause said plastic material to set.

4. A device (1) for producing thick lenses of plastic material, in particular lenses having a diameter to thickness ratio of less than about 10, and comprising a mold (2) having an inner cavity (3) corresponding in shape to the lens for molding, and an injection channel (4) for feeding liquid plastic material into said cavity (3); an end wall (8) of said cavity (3) having a first work surface (10) corresponding to a first optical surface of said lens; said injection channel (4) being formed through said end wall (8) completely outside said cavity (3) and having an end nozzle (18) which communicates with the cavity (3) through an injection hole (14) and is located inside said end wall (8) with an end edge (19) of the nozzle substantially flush with said first work surface (10); said injection channel (4) having movable plugging means (21) for selectively closing said injection hole (14);
the device being **characterized in that** said injection hole (14) is located at the geometric center of said first work surface (14) and said injection channel (4) is substantially perpendicular to said first work surface (10);
and **in that** said movable plugging means (21) comprise a pin plug (22) sliding axially inside said end nozzle (18) and having a head (23) insertable inside said injection hole (14), flush with said first work surface (10), to restore the continuity of said first work surface (10).

5. A device as claimed in the foregoing Claim, **characterized in that** said injection channel (4) has heating means (17) for maintaining the plastic material fed along said injection channel (4) at a predetermined temperature such as to prevent said plastic material from setting in said injection channel (4).

6. A device as claimed in the foregoing Claim, **characterized in that** said movable plugging means (21) comprise actuating means (24) for moving said pin plug (22) axially.

## Patentansprüche

1. Verfahren zum Erzeugen von dicken Linsen aus Kunststoffmaterial, insbesondere Linsen, die ein Verhältnis von Durchmesser zu Dicke von weniger als ungefähr 10 aufweisen, welches folgende Schritte aufweist:
- Vorbereiten einer Form (2), die eine Innenaussparung (3) entsprechend der Form der zu formenden Linse hat und die eine erste Arbeitsfläche (10) aufweist, welche einer ersten optischen Fläche der Linse entspricht; und
- Ausführen eines Einspritzens von flüssigem Kunststoffmaterial in die Aussparung (3) der Form (2), wobei das Einspritzen mittels eines Einspritzkanals (4) durchgeführt wird, der vollständig außerhalb der Aussparung (3) ist und eine Enddüse (18) aufweist, welche mit der Aussparung (3) kommuniziert und ihrerseits einen Endrand (19) aufweist, der mit der ersten Arbeitsfläche (10) fluchtet;
wobei das Verfahren **dadurch gekennzeichnet ist, dass** das Einspritzen von flüssigem Kunststoffmaterial in einer geometrischen Mitte der ersten Arbeitsfläche (10) und in einer Richtung im Wesentlichen senkrecht zur ersten Arbeitsfläche (10) ausgeführt wird, worauf ein Schritt zum Verschließen des Einspritzkanals (4) folgt und das Wiederherstellen der Kontinuität der ersten Arbeitsfläche (10) folgt.

2. Verfahren nach Anspruch 1, **dadurch gekennzeichnet, dass** das Einspritzen mittels eines Einspritzkanals (4) durchgeführt wird, der auf eine vorher festgelegte Temperatur erwärmt wird und auf dieser gehalten wird, um zu verhindern, dass das Kunststoffmaterial sich im Einspritzkanal (4) absetzt.

3. Verfahren nach Anspruch 2, **gekennzeichnet dadurch, dass** es nach dem Schritt zum Verschließen des Einspritzkanals (4) und zur Wiederherstellung der Kontinuität der Arbeitsfläche (10) außerdem einen Schritt zum Kühlen des Kunststoffmaterials in der Form (2) aufweist, um zu bewirken, dass sich das Kunststoffmaterial absetzt.

4. Vorrichtung (1) zum Erzeugen von dicken Linsen aus Kunststoffmaterial, insbesondere Linsen, die ein Verhältnis von Durchmesser zu Dicke von weniger als ungefähr 10 aufweisen und eine Form (2) aufweist, welche eine Innenaussparung (3) entsprechend der Form der zu formenden Linse aufweist, und einen Einspritzkanal (4), um flüssiges Kunststoffmaterial in die Aussparung (3) zu führen, und wobei eine Endwand (8) der Aussparung (3) eine erste Arbeitsfläche (10) aufweist, welche einer ersten optischen Fläche der Linse entspricht, wobei der Einspritzkanal (4) durch die Endwand (8) vollständig außerhalb der Aussparung (3) gebildet ist und eine Enddüse (18) aufweist, die mit der Aussparung (3) über ein Einspritzloch (14) kommuniziert und innerhalb der Endwand (8) angeordnet ist, wobei ein Endrand (19) der Düse im Wesentlichen mit der ersten Arbeitsfläche (10) fluchtet, wobei der Einspritzkanal (4) eine bewegbare Verschlusseinrichtung (21) aufweist, um das Einspritzloch (14) selektiv zu verschließen;
wobei die Vorrichtung **dadurch gekennzeichnet ist, dass** das Einspritzloch (14) in der geometrischen Mitte der ersten Arbeitsfläche (14) und der Einspritzkanal (4) im Wesentlichen senkrecht zur ersten Arbeitsfläche (10) angeordnet sind;
und dass die bewegbare Verschlusseinrichtung (21) einen Stiftverschluss (22) aufweist, der innerhalb der Enddüse (18) axial verschiebbar ist und einen Kopf (23) aufweist, der in das Einspritzloch (14) einführbar ist, der mit der ersten Arbeitsfläche (10) fluchtet, um die Kontinuität der ersten Arbeitsfläche (10) wiederherzustellen.

5. Vorrichtung nach dem vorhergehenden Anspruch, **dadurch gekennzeichnet, dass** der Einspritzkanal (4) eine Erwärmungseinrichtung (17) hat, um das Kunststoffmaterial, welches längs des Einspritzkanals (4) zugeführt wird, auf einer vorher festgelegten Temperatur zu halten, um zu verhindern, dass sich das Kunststoffmaterial im Einspitzkanal (4) absetzt.

6. Vorrichtung nach dem vorhergehenden Anspruch, **dadurch gekennzeichnet, dass** die bewegbare Verschlusseinrichtung (21) eine Betätigungseinrichtung (24) aufweist, um den Stiftverschluss (22) axial zu bewegen.

## Revendications

1. Méthode de production de lentilles épaisses en matériau plastique, en particulier des lentilles qui ont un rapport diamètre sur épaisseur inférieur à 10 environ, en incluant les étapes de :
- préparation d'un moule (2) avec une cavité intérieure (3) correspondant à la forme de la lentille pour le moulage et pour bénéficier d'une première surface de travail (10) correspondant à une première surface optique de ladite lentille; et
- la réalisation d'une injection de plastique liquide dans ladite cavité (3) du moule (2); ladite injection étant réalisée au moyen d'un canal d'injection (4) qui est complètement à l'extérieur de ladite cavité (3) et qui possède une buse (18) à son extrémité communiquant avec ladite cavité (3) et qui possède également un rebord (19) qui est au même niveau que la première surface de travail (10) ;
la méthode étant **caractérisée en ce que** ladite injection de liquide plastique est effectuée à un centre géométrique de ladite première surface de travail (10) et en direction substantiellement perpendiculaire à ladite première surface de travail (10), et elle est suivie par la fermeture du canal d'injection (14) en restaurant la continuité de ladite première surface de travail (10).

2. Méthode selon la revendication 1, **caractérisée en ce que** l'injection est réalisée au moyen d'un canal d'injection (4) chauffé et maintenu à une température prédéterminée de façon à empêcher le matériau plastique de se déposer dans le canal d'injection (4).

3. Méthode selon la revendication 2, **caractérisée par le fait qu'**elle comprend également, après l'étape de fermeture du canal d'injection (4) et la restauration de la surface de travail (10), une étape de refroidissement du matériau plastique dans le moule (2) pour faire se déposer ledit matériau.

4. Système (1) pour produire des lentilles épaisses en matériau plastique, en particulier des lentilles ayant un rapport diamètre sur épaisseur inférieur à 10 environ, et comprenant un moule (2) ayant une cavité intérieure (3) correspondant à la forme de la lentille pour le moulage et un canal d'injection (4) pour alimenter le plastique liquide dans ladite cavité (3) ; une paroi (8) de ladite cavité (3) ayant une première surface de travail (10) correspondant à une première surface optique de ladite lentille ; ledit canal d'injection (4) étant formé par ladite paroi (8) complètement à l'extérieur de ladite cavité (3) et possédant une buse (18) à son extrémité communiquant avec ladite cavité (3) par un trou d'injection (14) et qui est situé à l'intérieur de ladite paroi (8) avec un rebord (19) de la buse qui est substantiellement au même niveau que la première surface de travail (10); ledit canal d'injection (4) ayant des moyens d'obturation coulissants (21) pour fermer de manière sélective ledit trou d'injection (14) ;
le système étant **caractérisé en ce que** le trou d'injection (14) est situé au centre géométrique de ladite première surface de travail (14) et ledit canal d'injection (4) est substantiellement perpendiculaire à ladite première surface de travail (10) ;
et **en ce que** ledit moyen d'obturation (21) comprend une broche (22) qui coulisse axialement à l'intérieur de ladite buse (18) en ayant une tête (23) insérable dans le trou d'injection (14), au niveau avec ladite surface de travail (10), pour restaurer la continuité de ladite première surface de travail (10).

5. Système comme revendiqué dans la revendication précédente, **caractérisé en ce que** ledit canal d'injection (4) possède des moyens de chauffage (17) pour maintenir le matériau plastique alimenté le long dudit canal d'injection (4) à une température prédéterminée de façon à empêcher ledit matériau plastique de se déposer dans le canal d'injection (4).

6. Système comme revendiqué dans la revendication précédente, **caractérisé en ce que** ledit moyen d'obturation (21) comprend un moyen d'actionnement (24) pour déplacer ladite broche (22) axialement.
